# EUROPEAN PATENT APPLICATION

(11) **EP 1 566 360 A1**
(43) Date of publication of application: **24.08.2005**
(21) Application number: 05250835.5
(22) Date of filing: 14.02.2005
(51) Int. Cl.: C02F 1/44, C02F 1/00

(54) **Water filtration device**

(30) Priority: 12.02.2004 US 543574 P
(71) Applicant: Innova Pure Water Inc., Clearwater, FL 33760 (US)
(72) Inventor: Smith, John, T., Dunedin, Florida 34698 (US); Nohren Jr., John E., St. Petersburg, Florida 33707 (US)
(74) Representative: Johnstone, Helen Margaret

(57) **Abstract**

A water filtration system includes a bottle having a top, a bottom and an interior. A first filter is disposed in the bottle interior, and a second filter is disposed in the bottle interior in series with the first filter. The second filter is formed of a sub-micron hollow fiber membrane filter and includes a filtered water outlet. The first and second filters are configured such that filtered water exits the filtered water outlet with the bottle in the upright attitude.

## Description

### CROSS-REFERENCES TO RELATED APPLICATIONS

This application claims the benefit of U.S. Provisional Patent Application Serial No. 60/543,574, filed February 12, 2004, the entire content of which is herein incorporated by reference. This application is also a continuation-in-part (CIP) of U.S. Patent Application Serial No. 10/486,346, filed October 21, 2004, pending, which is a CIP of U.S. Patent Application Serial No. 09/566,384, filed May 8, 2000, now U.S. Patent No. 6,569,329. U.S. Patent Application Serial No. 10/486,346 also is the U.S. national phase of International PCT Application No. PCT/US02/25188, filed August 12, 2002, which designated the United States. International PCT Application No. PCT/US02/25188 claims priority of U.S. Provisional Patent Application Serial No. 60/311,098, filed August 10, 2001. The entire contents of these applications are incorporated herein by reference.

### STATEMENT REGARDING FEDERALLY SPONSORED RESEARCH OR DEVELOPMENT

(NOT APPLICABLE)

### BACKGROUND AND SUMMARY OF THE INVENTION

The present invention relates to a water filtration bottle and, more particularly, to a water filtration bottle including a dual filter system enabling filtered water to exit the bottle when the bottle is in an upright attitude.

It has been recognized for years that a real necessity existed to treat water for Biological contamination as well as chemical contamination. Those that could are typically bulky and require the use of a hand pump capable of forcing the water through a sub-micron ceramic filter or a membrane such as used for reverse osmosis. Thus, a product, which could be configured as a Water Sport Bottle, or hydration unit, was needed. This product would need to remove by filtration both bacteria and protozoa, and have a nominal pore size in the 0.2 micron range. While there have been products introduced to the market which could potentially remove protozoa such as Crytosporidium and Giardia, few if any could remove bacteria when the user consumes the water directly from the bottle without post filtration chemical treatment, and remove virtually all the water from the bottle.

There is also the question of virus, which cannot be filtered but, when a concern, may be chemically treated with either iodine or chlorine compounds. When so treated it is highly desirable to be able to remove the disinfecting chemical, and if not the complete chemical, certainly the taste thereof, which users find highly objectionable.

In a previous design, dual filter elements were used, arranged in tandem, or in a nested configuration, and enclosed within a shroud, which functioned as a straw annulus. The straw annulus with water entry ports near the top enabled the user to force water to the upper filter when the bottle is inverted for drinking, and less water is in the bottle than would otherwise reach or cover the inlet ports of the primary carbon composite filter positioned in tandem with the secondary filter. The shroud precludes the secondary hollow fiber membrane (HFM) filter from normally being drained of water, which enhances ease of use, eliminating the necessity to expel the energy required to refill the filter element with water in order to drink. The primary filter is manufactured of carbon composite materials and pre-treats the water before delivering the water into the sub-micron hollow fiber membrane filter from which the treated water is delivered directly to the user. In this configuration, however, it is difficult to filter the last ounce or two from the bottle.

As a means to simplify the design as well as to permit the product to be used upright with a drinking "straw," a modification of the preceding design is required. There is also a group of users, both men and women, that prefer to drink from a "straw" rather than a "pull-push" valve, which requires inverting the bottle to obtain water. Two means are used to maintain the water within the hollow fiber membrane filter, precluding the water from draining out by gravity when not in use in the normal, or vertical up-right plane of this new design.

It is recognized that for the product to be used in the up-right, or vertical attitude that the water must be picked up from the bottom of the container. This is accomplished by encapsulating the primary carbon composite filter in a shroud forming an annulus about the filter. Thus, while delivering water to the entire circumferential surface area of the filter, water entry ports are limited to the base of the shroud housing. Without the use of the shroud design, air would intrude with several inches of water remaining within the bottle making removal of the water below the air access point more difficult. The use of such a shroud is disclosed in U.S. Patent No. 6,153,096. The shroud may be used to directly support the carbon composite element, or a housing otherwise containing the filter element.

In use, the water is either, or both, sucked and pressurized by squeezing the bottle by hand drawing / forcing the water into and through the carbon composite filter and then directly into the hollow fiber membrane filter for delivery to the user. It has been recognized that to enhance usage as well as to reduce the distance of water flow, it is desirable to retain the water within the hollow fiber membrane filter housing to preclude the necessity of purging air that may have reentered the filters as a result of the water draining back through the filter elements. The mechanics to do this are relatively simple when using tubing as a delivery "straw". The tubing is crimped shut by a top closure causing a vacuum within the tube holding the residual water in place. This mechanism is coupled with the use of the carbon filter shroud, which only has water access ports at its base, and forms a narrow water chamber, in the form of an annulus, surrounding the radial flow carbon composite filter. Using a small annulus with a space approximating 0.01-0.035 inches, the surface tension from both the filter element and shroud preclude all but very slow drainage back into the bottle. This feature in conjunction with the filter water entry ports positioned at the bottom of the shroud at the base of the bottle combines with the water remaining within the bottle to provide a head pressure, thereby restraining the flow of water back from the radial flow carbon composite filter, as well as from the hollow fiber membrane filter, and back into the bottle.

With the subject invention the user may now choose between a "pull-push" valve and a bottle that flows.water to the user when inverted, or using the described means to access the water directly from the bottom of the bottle, the bottle is used up-right with the water delivered through tubing ("straw") that may be clamped shut to retain the residual water within the tubing.

The use of the sub-micron hollow fiber membrane with a nominal pore diameter of 0.2 microns and an absolute pore size within 0.1 - 0.3 microns, but of such a configuration based upon wall and pore geometry that all protozoa and bacteria through 0.2 microns in size are precluded from passage, is a unique feature of the Innova products. Another advantage is the large surface area achieved by the use of the sub-micron hollow fiber membrane bundled within a filter housing. This system is superior to carbon block or ceramic type filters as the smaller pore size of the HFM assures the effective filtration of bacteria, whereas the carbon and ceramic filters must employ significantly larger pore size, relying upon what is termed a torturous path and van der Waals forces to restrain the bacteria. In a portable bottle type unit, the backpressure is too great with a thick-walled ceramic or carbon filter element to use with pore sizes below 10-20 micron, and if employed would be suspect in their ability to effectively remove bacteria over a reasonable and usable time. Further, due to the nature of the media and manufacturing process, the ability to closely regulate pore size is absent, and pores significantly larger than claimed, possibly by a factor of two to three times, would occur. With the sub-micron hollow fiber membrane used by Innova, approximately 7.3 cm in length and 3 cm in diameter, a flow rate of 12 ml per second is achieved with an applied pressure of 10 psig, which is well within the comfortable limit of the normal user. The functional 0.2 micron absolute pore size assures the desired performance.

For use where there is expected high levels of chemical contamination, such as with potential military applications, it would be desirable to replace the carbon composite primary filter element with Innova's Low Density media, which provides maximum contaminant removal over a wide range of contaminants including VOC's and is also advantageous due to its exceptionally long life and ability to reduce particulate matter and turbidity. By using the Low Density media, a second application and configuration of the "straw" and upright based biological sport bottle combines the unique low-density media covered in U.S. Patent Application Serial No. 09/963,636, and U.S. Patent No. 6,506,449 covering the manufacture of the Low Density media with an independent hollow fiber membrane positioned at the base of the bottle and connected to the bottle top and valve by means of a tube or straw. The advantage of the positioning of the sub-micron hollow fiber membrane element at the base of the bottle takes advantage of gravity to retain water within the adjacent low density filtration media, particularly when the water volume becomes low. If the HFM was attached to the top of the bottle, or bottle top with valve, and the bottle was inverted to drink, there would be some delay as the water drained back to the top of the bottle, when partially filled.

A second advantage is the ability to have all the water treated to a maximum with the positioning of the HFM at the base of the bottle. The water when filled into the bottle will percolate down through the Low Density filtration media, removing or significantly reducing the non-biological contaminants, the biological contaminants being removed by the HFM.

In an exemplary embodiment of the invention, a water filtration system includes a bottle having a top, a bottom and an interior, and first and second filters. The bottle is considered in an upright attitude when the top is above the bottom. The first filter is disposed in the bottle interior, and the second filter is disposed in the bottle interior downstream from and in series with the first filter. The second filter is a hollow fiber membrane filter and includes a filtered water outlet. The first and second filters are configured such that filtered water exits the filtered water outlet with the bottle in the upright attitude. Preferably, at least the second filter includes a water inlet disposed in the bottle interior adjacent the bottle bottom.

A one-way valve may be provided to permit re-inflation of the bottle. In this context, a bottle lid may be removably securable to the bottle top, where the one-way valve is a relief valve in the bottle lid.

A water outlet tube may be affixed to the filtered water outlet of the second filter. The water outlet tube directs the filtered water out of the bottle. Additionally, the water outlet tube may serve as a straw enabling user withdrawal of the filtered water. The bottle top preferably includes structure for closing the bottle top from the atmosphere and for sealing off the water outlet tube such that when the closure means is closed, water residing in the first and second filters is prevented from being drained.

The first filter and the second filter may be affixed together via a water tight friction fit, where the first filter includes a water inlet disposed in the bottle interior adjacent the bottle bottom. In a preferred arrangement, the first filter comprises a carbon composite filter. The first filter may include an outer shroud housing the carbon composite filter, which outer shroud is circumferentially spaced from the carbon composite filter to define an annular water reservoir. The first filter may be removable, where the water filtration system is functional with the first filter removed.

The first filter may alternatively include a low density medium substantially filling the bottle interior. In this context, the first filter has an opening therethrough to receive the second filter. A flange plate may be disposed over the opening in the first filter. The flange plate is sized and shaped to prevent raw water from entering the opening.

Preferably, at least the first filter is cleanable.

In one arrangement, the first filter is attached to and at least partially surrounding the second filter. In this context, the first filter is circumferentially spaced from the second filter to define an annular water reservoir between the first filter and the second filter. The first filter may be formed of a polysulphone membrane.

The water filtration system may additionally include a pre-filter disposed adjacent the bottle top. The pre-filter includes at least two levels of filter sheets having progressively finer pore size, where the filter sheets are separated by mesh screens.

### BRIEF DESCRIPTION OF THE DRAWINGS

These and other aspects and advantages of the present invention will be described in detail with reference to the accompanying drawings, in which:
FIGURE 1 illustrates an embodiment of the invention combining a sub-micron hollow fiber membrane element and an independent carbon composite filter;
FIGURE 2 illustrates an alternative embodiment using low density filtration;
FIGURE 3 illustrates yet another alternative embodiment using a pre-filter wrap; and
FIGURE 4 illustrates assembly components for an optional multi-layered varying porosity bundled pre-filter.

### DETAILED DESCRIPTION OF THE INVENTION

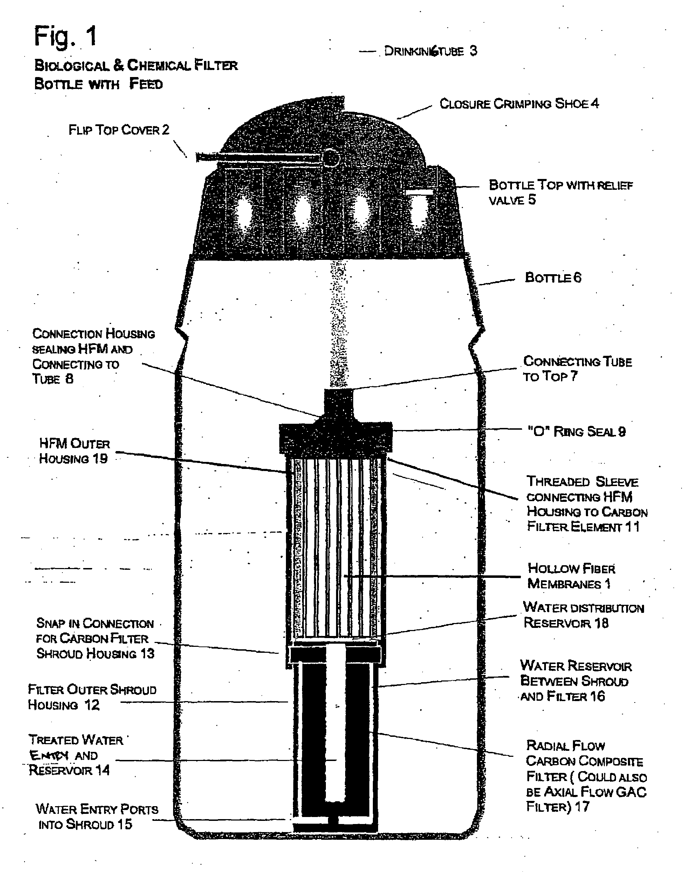

FIG. 1 illustrates a first embodiment of the invention. A bottle 6 includes a lid 5 which threads on the bottle top to form a water tight seal. A one way air relief vent is incorporated within the lid 5 as shown in Fig. 1. Bottle lid 5 supports a pivoting top cover 2, which when opened allows a drinking tube 3 to extend to an upright drinking position. The drinking tube 3 is fastened by sliding over and being held by friction to a cylindrical extension molded as a component into the lid 5. When the pivoting cover top 2 is pivoted 90 degrees, it forces the drinking tube 3 over a crimping shoe 4, effectively sealing the bottle from leakage as well as forming a protective cover over the drinking tube 3

A connecting tube 7 connects to the lid 5 via a plastic connecting cylinder molded into the lid 5. A connecting housing 8 attaches by mating male and female friction fit parts. The connecting housing 8 supports an HFM filter housing 19 containing hollow fiber membrane filter materials 1.

The HFM housing 19 is retained within the connecting housing 8 by means of a threaded, or snap-in sleeve connection 11, which threads, or snap locks into connecting housing 8 and retains the compressed "O" ring seal 9 to preclude bacterial by-pass. The opposite end of the threaded sleeve 11 includes an internal ring defining a snap in connection 13 to form an assembly and locking means to secure the carbon filter 17 in a position to interface with the HFMs 1.

With the carbon filter 17 locked in position, a water reservoir 18 is formed between the carbon composite filter 17 and the HFMs 1 to feed and distribute water to the HFM's 1. The carbon filter outer shroud housing 12 remains independent and may be snapped on or off connector 13 for replacement or limited use purposes. The radial flow carbon composite filter 17 is contained within housing 12 and aligned by means of a controlled fit at the top of the shroud housing 12. The space between the carbon filter 17 and the shroud housing 12 forms an annular water reservoir 16 providing access to the full circumference of the radial flow filter body 17. As the water flows radially through the filter 17, it accumulates in a central water reservoir 14 and is forced out of reservoir 14 by either or both hand force squeezing the bottle 6 and/or drawing a vacuum on the drinking straw 3. Water entry ports 15 are at the base of the outer shroud housing 12 adjacent a bottom part of the bottle 6.

The embodiment in FIG. 1 is a more direct approach combining a sub-micron hollow fiber membrane element with the means to both support the HFM to a water transfer tube and to integrate an independent primary carbon composite filter. The carbon composite radial flow filter removes better than 80-90% of chlorine and 97% of lead at a flow rate of 10 ml/sec as tested by NSF. Granular activated carbon GAC operating as an axial flow filter could also be used. Operating as the primary (first) filter, the carbon composite element reduces both chemical and metal contaminants while also acting as a particulate and turbidity filter.

The HFM operates as a secondary (second) filter and eliminates protozoa cysts and bacteria above the level specified by the EPA under EPA testing protocol which for bacteria is 99.9999%, and the lower requirement of 99.99% for the larger protozoa cysts. The drinking tube extends from a fitting on the topside of the top which is opened by rotating back a hinged cover; similarly, the tube is squeezed shut and hidden (covered) as the cover is rotated back to the closed position. The HFM may be used independently simply for the removal of biological contamination.

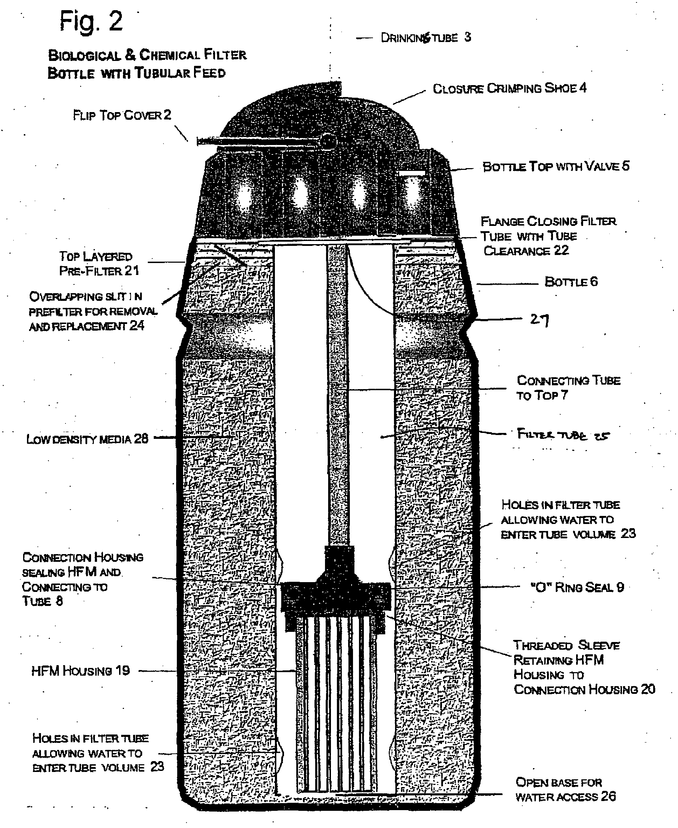

An alternative embodiment of the invention is illustrated in Fig. 2. Components of like construction in FIG. 2 are labeled with the same reference numerals, and the description will not be repeated. With reference to FIG. 2, the connecting housing 8 attaches by mating male and female friction fit components and supports HFM filter housing 19 containing the HFMs 1. The HFM housing 19 is retained within the connecting housing 8 by means of a threaded or snap ring connection 20, which threads or snaps into connecting housing 8 and compresses the "O" ring seal 9 to preclude bacterial by-pass. The HFM housing 19 containing the HFMs 1 is open at the bottom 26 for water access.

Internally, within the bottle 6, a top pre filter 21 may be installed to pre-filter water entering the bottle. Each element of the pre-filter is slit at 24 to permit the removal and replacement of the pre-filter around the connecting tube 7. A low density filtration media 28 for chemical-metal removal fills the remainder of the bottle with the exception of filter tube 25. The filter tube 25 centers the HFM component assembly and provides a path by which the HFM assembly may be elevated in conjunction with the removal of the top allowing the bottle to be refilled. This is accomplished without interfering with the Low Density media 28. The media 28 used is preferably low-density non-woven material coated with activated carbon and complementing medias. A cylindrical opening is formed by filter tube 25 in the media 28 and is closed with a flanged washer 22 containing a central pass though hole 27 providing a mechanism for partially removing the HFM filtration assembly 1, 8, 19, when the lid 5 is removed for filling. The flanged washer 22 is mechanically fastened to the filter tube 25 to permit complete removal and disassembly of the HFM assembly. The base of the HFM housing 19 is open at 26 for the normal in-feed of water. Openings 23 are formed in the filter tube 25 near the bottom as well as slightly above the connecting housing 8 when positioned in the normally operating position (i.e., in an upright attitude with the top above the bottom). The openings 23 permit water to flow into and out of the media 28, from and into the filter tube 25. One additional function of the holes 23 at the base is to allow entrapped air to escape from the media 28 during filling, which function is also provided by the upper set of holes 23. The holes 23 also permit ready access of water and preclude any water that may enter through the tube access connecting hole to migrate into the treatment media.

The embodiment in FIG. 2 is similarly a sport type bottle that functions in the same manner as the FIG. 1 embodiment with the exception that the low density filtration media is used as the primary (first) filtration media instead of the radial flow carbon composite filter. An advantage to this construction is the ability to remove a broader range of chemical and metal contaminants, with a longer life than the radial flow carbon composite block filter or a GAC axial flow filter. An additional advantage is the reduction in pressure required to force water through either of the alternative carbon filters, thus making the product easier to use. Considerably less pressure drop is encountered.

To permit the lid to be easily removed for refilling the bottle with water, the HFM assembly and connecting tube are positioned within the filter tube 25 allowing the HFM to be partially removed with the lid during the refilling operation. The flange 22 covering the top of the filter tube 25 contains a central hole through which the tubing 7 connecting the HFM to the lid may slide.

The flange is nested upon and retains a split non-woven particle pre filter 21, which is replaceable as the need may arise. The pre-filter bundle (described in detail below) is unique as it pre filters the water on entry, removing various sizes of particulate matter. The characteristics of the single piece filter, when employed, are dependent upon the requirements or aesthetic appearance desired.

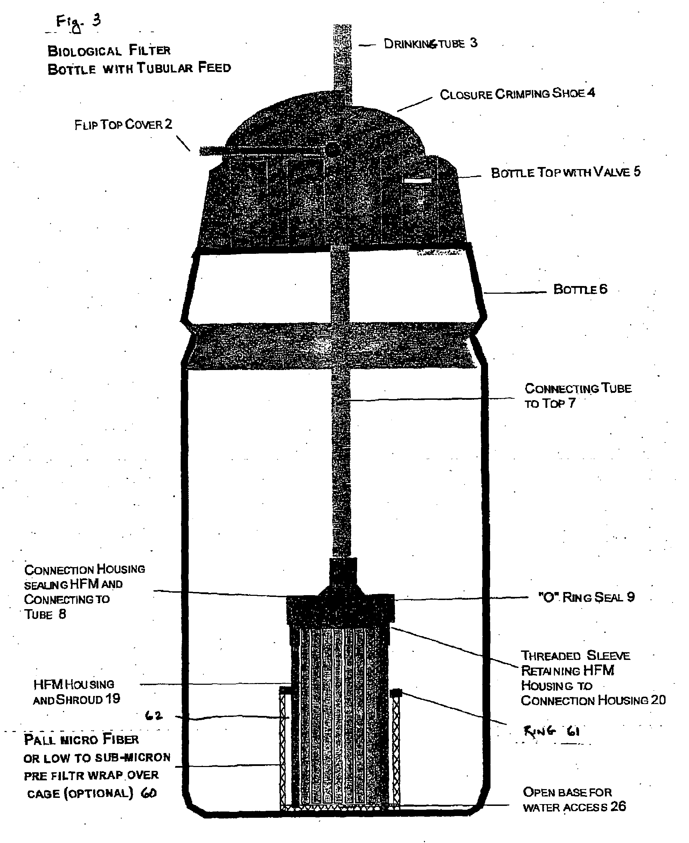

FIG. 3 illustrates still another embodiment of the invention. In this embodiment, the primary (first) filter 60 is attached to and at least partially surrounding the HFM housing 19. The first filter is circumferentially spaced from the HFM housing 19 via a ring 61 to define an annular water reservoir 62 between the first filter 60 and the HFM housing 19. Supporting legs or an open cage may also attach between the ring 61 to the bottle bottom or to a bottom ring to thereby maintain the annular water reservoir 62.

Preferably, the first filter 60 is formed of a polysulphone membrane with a pore size ranging from 8 to 0.5 microns, although a pore size as low as 0.2 microns could also be used. One suitable filter is the Versapor filter from Pall Corp. of East Hills, New York.

An advantage of the polysulphone membrane when the silt is present is that it lowers the pressure drop across the filter media, making it easier for the user to extract the water. Additionally, the filter 60 is cleanable. The filter 60 may be offset to permit additional surface area to be employed. The filter 60 may also be formed into a pleated configuration to again add to the filter surface area. The use of this first filter is optional.

Similar to the embodiments described above, the HFMs 1 are held in an impervious shroud 19, which is the housing supporting the HFMs, permitting water entry from the base, thus allowing substantially all of the water to be extracted from the bottle, with the bottle in an upright configuration.

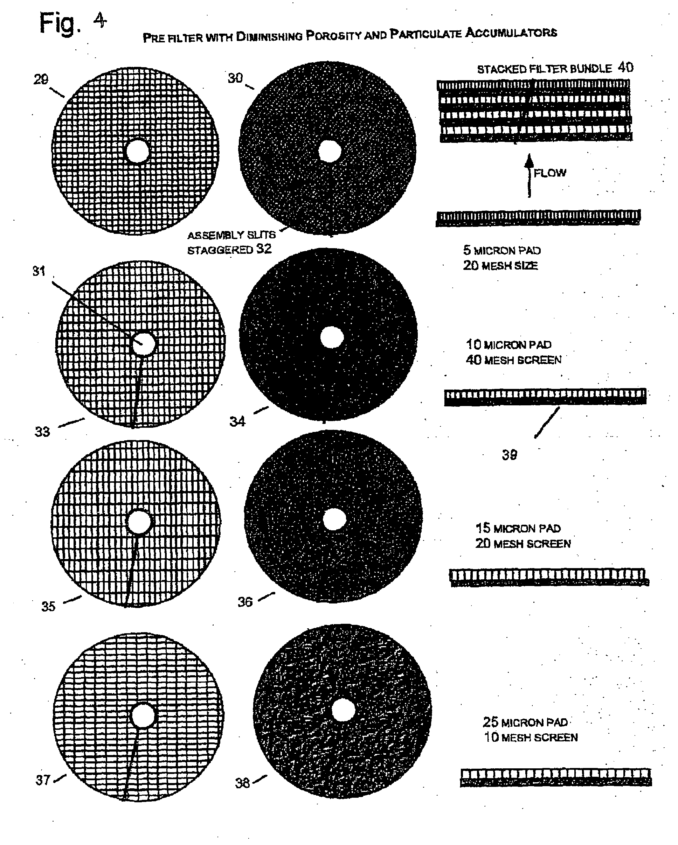

With reference to FIG. 4, the filter bundle 21, if employed, preferably includes four separate layers of progressively smaller pore size pads 30, 34, 36, 38 from approximately 25 microns down to 5 microns; each pad being separated by a screen 29, 33, 35, 37 of varying mesh sizes from approximately 10 mesh down to 60 mesh. The separating screens enhance flow and filter life by providing an area to accumulate particulate held back by the respective filter pad(s). The bundled pad is optional in use to a single non- woven pad of practically any reasonable thickness or porosity. Each pad and screen includes a slit 32, which should be slightly staggered on assembly, and a tubing access hole 31. By staggering the slits 32, a path where water can flow without passing through and of the filter pads is avoided.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the spirit and scope of the appended claims.

## Claims

1. A water filtration system comprising:
a bottle having a top, a bottom and an interior, the bottle being oriented in an upright attitude when the top is above the bottom;
a first filter disposed in the bottle interior; and
a second filter disposed in the bottle interior downstream from and in series with the first filter, the second filter comprising a hollow fiber membrane filter and comprising a filtered water outlet, wherein the first and second filters are configured such that filtered water exits the filtered water outlet with the bottle in the upright attitude.

2. A water filtration system according to claim 1, wherein at least the second filter comprises a water inlet disposed in the bottle interior adjacent the bottle bottom.

3. A water filtration system according to claim 1, further comprising a one-way valve permitting re-inflation of the bottle.

4. A water filtration system according to claim 3, further comprising a bottle lid removably securable to the bottle top, wherein the one-way valve comprises a relief valve in the bottle lid.

5. A water filtration system according to claim 1, further comprising a water outlet tube affixed to the filtered water outlet of the second filter, the water outlet tube directing the filtered water out of the bottle.

6. A water filtration system according to claim 5, wherein the water outlet tube serves as a straw enabling user withdrawal of the filtered water.

7. A water filtration system according to claim 6, wherein the bottle top comprises closure means for closing the bottle top from atmosphere and for sealing off the water outlet tube such that when the closure means is closed, water residing in the first and second filters is prevented from being drained.

8. A water filtration system according to claim 1, wherein the first filter and the second filter are affixed together via a water tight friction fit, and wherein the first filter comprises a water inlet disposed in the bottle interior adjacent the bottle bottom.

9. A water filtration system according to claim 8, wherein the first filter comprises a carbon composite filter.

10. A water filtration system according to claim 9, wherein the first filter comprises an outer shroud housing the carbon composite filter, the outer shroud being circumferentially spaced from the carbon composite filter defining an annular water reservoir.

11. A water filtration system according to claim 8, wherein the first filter is removable, and wherein the water filtration system is functional with the first filter removed.

12. A water filtration system according to claim 1, wherein the first filter comprises a low density medium substantially filling the bottle interior, the first filter having an opening therethrough to receive the second filter.

13. A water filtration system according to claim 12, further comprising a flange plate disposed over the opening in the first filter, the flange plate being sized and shaped to prevent raw water from entering the opening.

14. A water filtration system according to claim 1, wherein at least the first filter is cleanable.

15. A water filtration system according to claim 1, wherein the first filter is attached to and at least partially surrounding the second filter.

16. A water filtration system according to claim 15, wherein the first filter is circumferentially spaced from the second filter defining an annular water reservoir between the first filter and the second filter.

17. A water filtration system according to claim 16, wherein the first filter comprises a polysulphone membrane.

18. A water filtration system according to claim 1, further comprising a pre-filter disposed adjacent the bottle top.

19. A water filtration system according to claim 18, wherein the pre-filter comprises at least two levels of filter sheets having progressively finer pore size, the filter sheets being separated by mesh screens.
